**Europäisches Patentamt**

**European Patent Office**

**Office européen des brevets**

(11) Veröffentlichungsnummer: **0 125 455**
**B1**

(12) **EUROPÄISCHE PATENTSCHRIFT**

(45) Veröffentlichungstag der Patentschrift:
26.02.86

(21) Anmeldenummer: 84103690.8

(22) Anmeldetag: 04.04.84

(51) Int. Cl.⁴: **B 65 G 17/20**

(54) Stau-Hängeförderer mit einem in der Horizontalebene umlaufenden, endlosen Führungsband.

(30) Priorität: 13.05.83 DE 3317403

(43) Veröffentlichungstag der Anmeldung:
21.11.84 Patentblatt 84/47

(45) Bekanntmachung des Hinweises auf die Patenterteilung:
26.02.86 Patentblatt 86/9

(84) Benannte Vertragsstaaten:
CH FR GB IT LI

(56) Entgegenhaltungen:
DE - A - 1 933 036
DE - A - 1 935 431
DE - A - 2 448 184
US - A - 3 338 420

(73) Patentinhaber: DÜRKOPPWERKE GMBH,
Nikolaus-Dürkopp-Strasse 10, D-4800 Bielefeld 1 (DE)

(72) Erfinder: Grube, Erwin, Linnenstrasse 120,
D-4800 Bielefeld 18 (DE)
Erfinder: Kuhlmann, Walter, Harnuckweg 19,
D-4937 Lage (DE)

## Beschreibung

Die Erfindung betrifft einen Stau-Hängeförderer mir einem hochkantig angeordneten, in der Horizontalebene umlaufenden, biegsamen, endlosen fürungsband.

Ein Hängeförderer ist durch die DE-A-1933036 bekannt, die ein beispielsweise aus Stahlband bestehendes, hochkantig gestelltes, vorzugsweise in der Horizontalebene umlaufendes, endloses Förderband aufweist. Das in vertikaler Richtung steife Förderband ist so beschaffen, daß es relativ leichtes, auf geeigneten Haken hängendes Fördergut aufzunehmen und zu befördern in der Lage ist. Der bekannte Hängeförderer ermöglicht jedoch nicht, daß das vom Förderband transportierte Fördergut bei umlaufendem Förderband zeitweilig festgehalten und aufgestaut werden kann.

Außerdem ist ein Hängeförderer bekannt (US-PS 3 338 420), der ein hochkantig angeordnetes Förderband aufweist, das - durch einen Friktionsantrieb bewegt - in der Horizontalebene umläuft. Besagtes Förderband weist eine Vielzahl ovaler Löcher auf, die auf Haken hängendes Fördergut, z. B. Kleidungsstücke, aufnehmen können. Der bekannte Hängeförderer ermöglicht jedoch nicht, daß das vom Förderband transportierte Fördergut bei umlaufendem Förderband zeitweilig festgehalten und aufgestaut werden kann.

Ferner ist seit langem eine Vielzahl von Schleppkreis-Hängeförderern bekannt, bei denen auf einer Führungsschiene verfahrbare, als Lastträger konzipierte Hängewagen - auch als "Trolleys' bezeichnetdurch Kupplungsvorrichtungen (sog. "Power and Free-Mitnehmer') von einer umlaufenden Schleppkette bewegt werden. Bei nur in der Horizontalebene verfahrbaren Hängewagen haben die bekannten Schleppkreis-Hängeförderer den Nachteil, daß die Mitnahme der Hängewagen nur mittels relativ aufwendiger Kupplungsvorrichtungen ermöglicht wird.

Der im Anspruch 1 angegebenen Erfindung liegt die Aufgabe zugrunde, einen nur in der Horizontalebene arbeitenden Stau-Hängeförderer zu schaffen, der bei ständig umlaufendem Führungsband das zeitweilige Festhalten des am Hängewagen angehängten Förderguts und/oder das zeitweilige Aufstauen mehrerer Hängewagen ermöglicht und der konstruktiv einfacher als die bekannten Schleppkreis-Hängeförderer aufgebaut ist.

Mit dem Stau-Hängeförderer nach der Erfindung ist es nun ohne großen Bauaufwand möglich, während des Fördervorganges jederzeit einen oder mehrere Hängewagen zwecks Be-, Um- oder Entladung anzuhalten und sofortigen Weitertransport des/der Hängewagen nach Wegnahme des Bewegungshindernisses zu erreichen.

Zweckmäßige Weiterbildungen des Gegenstandes nach Anspruch 1 sind in den Unteransprüchen beschrieben. Bei der Ausgestaltung des Stau-Hängeförderers nach Anspruch 3 wird erreicht, daß das Anhalten eines oder mehrerer Hängewagen durch die Aktivierung eines Anschlages mittels mechanischer Bauelemente, z. B. durch ein Hebelgetriebe oder durch einen erregten Elektromagneten oder durch einen mit Druckluft oder einem hydraulischen Medium beaufschlagten Zylinder, ermöglicht wird.

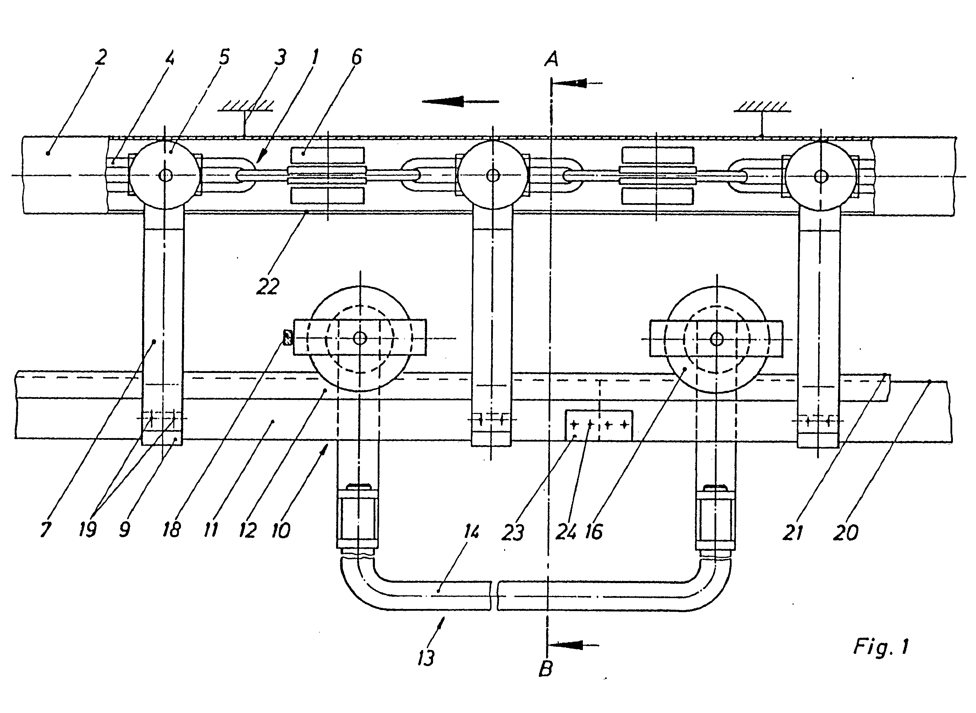

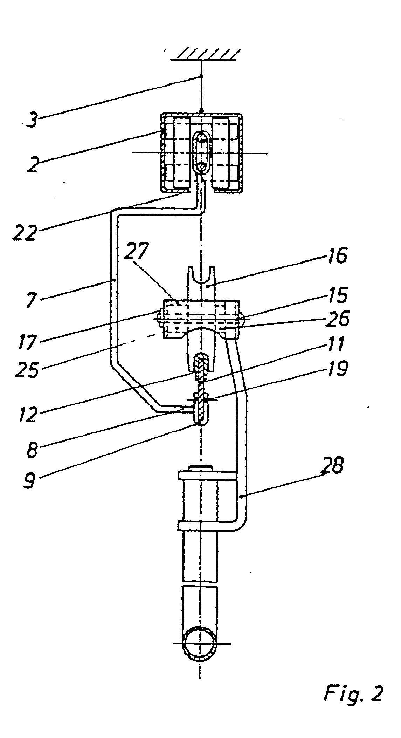

Ein Ausführungsbeispiel der Erfindung wird anhand der Fig. 1 und 2 erläutert.

Es zeigt:

Fig. 1 ein Teilstück eines Stau-Hängeförderers in Voderansicht

Fig. 2 eine Seitenansicht längs der Schnittlinie A-B

Der in Fig. 1 dargestellte Stau-Hängeförderer wird von einer an sich bekannten Schleppkette 1 angetrieben, die von einem Kettenkanal 2 aufgenommen wird. Der Kettenkanal 2 ist an Trägern 3 gebäudefest aufgehängt. Die Schleppkette 1 besteht im wesentlichen-aus einer von einem nicht dargestellten Getriebemotor stetig angetriebenen Gliederkette 4 und aus daran in an sich bekannter Weise befestigten Tragrollen 5 und Stützrollen 6. Fest mit der Gliederkette 4 sind Laschen 7 verbunden, die durch einen im Kettenkanal 2 befindlichen Schlitz 22 nach unten ragen. Ein abgewinkelter, an jeder Lasche 7 befindlicher Schenkel 8 ist fest mit einer Klemmbacke 9 verbunden. Der in der Klemmbacke 9 befindliche Schlitz nimmt das Band 11 auf, das durch Befestigungsmittel 19, z. B. durch Nieten, mit der Klemmbacke 9 fest verbunden ist. Die stumpf gegeneinander stoßenden Enden des Bandes 11 werden in bekannter Weise mittels einer an der Unterseite des Bandes 11 vorgesehenen biegsamen Lasche 23 und mittels handelsüblicher Befestigungsmittel 24, z. B. Nieten, miteinander verbunden und ergeben somit ein endloses Band, das über die Laschen 7 in direkter Verbindung mit der Schleppkette 1 steht.

Auf die Oberkante 20 des Bandes 11 wird eine handelsübliche Profilleiste 12, die genau so lang wie das Band 11 ist, so aufgesetzt, daß auch deren Enden stumpf gegeneinander stoßen. Zweckmäßigerweise liegt die Stoßstelle des Bandes 11 nicht deckungsgleich zur Stoß-stelle der Profilleiste 12. Letztere besteht vorzugsweise aus einem abriebfesten Kunststoff und ist so gestaltet, daß sie nach dem Aufsetzen ohne entsprechende Krafteinwirkung nicht vom Band 11 entfernbar ist.

Das durch die aufgesetzte Profilleiste 12 verstärkte Band 11 istobwohl es in vertikaler Richtung sehr steif ist - immer noch so biegsam, daß es Krümmungen in einem für Hängeförderer erforderlichen Ausmaß ohne weiteres zuläßt.

Ein an sich bekannter Hängewagen 13 besteht im wesentlichen aus einem Bügel 14, dessen Enden mit je einem Schenkel 28 fest verbunden sind. An dem oberen Ende des Schenkels 28 ist ein in sich geschlossener Rahmen 27 befestigt (vgl. Fig. 2). Im Rahmen 27 und im Schenkel 28 befinden sich zwei fluchtend gegenüberstehende Bohrungen, die einen gegen Drehung gesicherten Lagerzapfen 15 aufnehmen, der durch einen handelsüblichen Sicherungsring 17 gegen Herausfallen gesichert ist. Der Lagerzapfen 15 nimmt eine Laufrolle 16 und zwei Buchsen 25, 26 auf, die eine seitliche Verschiebung der Laufrolle 16 auf dem Lagerzapfen 15 verhindern. Die Laufrolle 16 weist auf ihrem Umfang eine eingestochene, vorzugsweise keilförmig ausgeführte Nute auf. Nach dem Aufsetzen des Hängewagens 13 auf das Führungsband 10 berührt dessen Laufkante 21 die in der Laufrolle 16 befindliche Nute.

Vorzugsweise oberhalb der Laufkante 21 befinden sich ein- und ausschwenkbare bzw. ein- und ausschiebbare Anschläge 18. Ihre für das Ein- und Ausrücken erforderliche Bewegung kann auf rein mechanischem Wege, z. B. durch ein Hebelgetriebe, ermöglicht werden. In anderen Ausführungsformen des Erfindungsgegenstandes kann jeder Anschlag 18 durch die Hubstange eines Elektromagneten oder durch die Kolbenstange eines mit Druckluft oder mit einem hydraulischen Medium beaufschlagten Zylinders dargestellt werden.

Nachfolgend wird die Wirkungsweise des erfindungsgemäßen Stau-Hängeförderers beschrieben:

Bei einem in seinem Betriebszustand befindlichen Stau-Hängeförderer bewegt sich die Schleppkette 1 in Förderrichtung (vgl. Pfeilrichtung in Fig. 1). Ebenso bewegt sich das mit der Schleppkette 1 verbundene Führungsband 10. Befinden sich auf dem Führungsband 10 ein oder mehrere Hängewagen 13, so werden diese infolge ihrer Eigenmasse vom umlaufenden Führungsband 10 mitgenommen. Während der eben beschriebenen Bewegung der Hängewagen 13 befinden sich deren Laufrollen 16 in Ruhe. Fährt ein vom Führungsband 10 mitgenommener Hängewagen 13 gegen ein in Forderrichtung auftretendes Hindernis, z. B. gegen einen Bingerückten Anschlag 18, so bleibt der Hängewagen 13 augenblicklich stehen. Da das Führungsband 10 weiter umläuft, drehen sich nunmehr die Laufrollen 16 des jetzt stehenden Hängewagens 13. Fährt ein anderer, in Förderrichtung hinter dem stehenden Hängewagen 13 sich befindlicher Hängewagen gegen den stehenden, so bleibt auch der zweite Hängewagen stehen, wobei sich jetzt auch dessen Laufrollen 16 zu drehen beginnen. Wird nun der in seiner aktiven Stellung verharrende Anschlag 18 ausgerückt, so nimmt das umlaufende Führungsband 10 augenblicklich die zuvor aufgestauten Hängewagen 13 mit, deren Laufrollen 16 sich dabei nicht drehen. Das Anhalten eines bzw. mehrerer Hängewagen 13 kann jedoch nicht nur durch einen eingerückten Anschlag 18 ausgelöst werden, sondern kann auch dadurch erfolgen, daß eine Bedienungsperson zwecks Be-, Ent- und Umladung einen Hängewagen zeitweilig festhält.

## Patentansprüche:

1. Stau-Hängeförderer mit einem hochkantig angeordneten, in der Horizontalebene umlaufenden, biegsamen, endlosen Führungsband (10), wobei das von einer Schleppkette (1) angetriebene Führungsband (10) aus einem Band (11) und aus einer auf seiner Oberkante (20) aufgesetzten, unverlierbar gestalteten Profilleiste (12) besteht, wenigstens ein mit wenigstens einer Laufrolle (16) versehener Hängewagen (13) auf einer Laufkante (21) des Führungsbandes (10) aufsetzbar ist und wenigstens ein in seine aktive Stellung verbringbarer Anschlag (18) vorgesehen ist, durch den die Mitnahme wenigstens eines Hängewagens (13) verhinderbar ist.

2. Stau-Hängeförderer nach Anspruch 1, dadurch gekennzeichnet, daß an der Schleppkette (1) befestigte Laschen (7) durch den in einem Kettenkanal (2) befindlichen Schlitz (22) nach unten ragen, daß der abgewinkelte Schenkel (8) jeder Lasche (7) eine Klemmbacke (9) aufweist und daß das Band (11) durch Befestigungsmittel (19) mit der Klemmbacke (9) verbunden ist.

3. Stau-Hängeförderer nach Anspruch 1, dadurch gekennzeichnet, daß der Anschlag (18) in bekannter Weise mittels mechanischer Bauelemente oder fremdkraftbetätigt auf elektromagnetischem oder druckmittelbetätigtem Wege aktivierbar ist.

## Claims

1. Aerial accumulator conveyor with a flexible endless guide belt (10), rotating in a horizontal plane and arranged in an edge-raised position, in connection with which said guide belt (10) is driven by a drag chain (1) and comprises a belt (11) and a profiled strip (11), which is placed on by its upper edge (20) and which is of special design to prevent its loss; at least one suspended carriage (1) is provided, with at least one running roller(18), which is capable to be placed on a running edge (21) of said guide belt (10) and at least one abutment (18), which is capable to be displaced into its active position, by means of which the driving of at least one suspended carriage (13) can be prevented.

2. Aerial accumulator as per claim 1, characterized in that straps (7) are fastened to said drag chain (1) and that said straps extend downwards through a slot (22) situated in a chain duct (2) and that the leg (8) bent at an angle of each strap (7) is provided with a clamp jaw (9) and that the belt (11) is connected to said clamp jaw (9) by fastening means (19).

3. Aerial accumulator as per claim 1, characterized in that the abutment (18) is capable to be activated in a manner known per se either by means of mechanical components or from an outside
power by electromagnetic or fluid operated
means.

**Revendications:**

1. Accumulateur-convoyeur aérien avec une
bande conductrice sans fin (10), souple, disposée
de chant et circulant dans un plan horizontal, la
bande conductrice (10) étant actionnée par une
chaîne d'entraînement à raclettes (1) et
consistant en une bande (11) et un profilé (12)
posé sur son bord supérieur (20) et conçu de
façon imperdable, au moins un wagonnet (13)
doté au moins d'un galet de roulement (16)
pouvant être posé sur une arête de roulement (21)
de la bande conductrice (10) et étant prévue au
moins une butée (18) déplaçable vers sa position
active, par laquelle l'entraînement au moins d'un
wagonnet (13) peut être empêché.
2. Accumulateur-convoyeur aérien selon la
revendication 1,
    caractérisé en ce que
    des éclisses (7) attachées à la chaîne
d'entraînement à raclettes (1) débordent par la
fente (22) ménagée dans un conduit à chaîne (2)
vers le bas, que l'aile coudée (8) de chaque
éclisse (7) présente une mâchoire de serrage (9)
et que la bande (11) est reliée à la mâchoire de
serrage (9) par des moyens de fixation (19).
3. Accumulateur-convoyeur aérien selon la
revendication 1,
    caractérisé en ce que
    la butée (18) peut être activée d'une façon
connue moyennant des composants mécaniques
ou actionnée par force extérieure
électromagnétiquement ou par des moyens
pneumatique ou hydraulique.

Fig. 1

*Fig. 2*